# FASCICULE DE BREVET EUROPEEN

(11) **EP 2 704 928 B1**
(45) Date de publication et mention de la délivrance du brevet: **30.12.2015**
(21) Numéro de dépôt: 12724682.5
(22) Date de dépôt: 23.04.2012
(51) Int. Cl.: B60S 1/52

(54) **CIRCUIT DE DISTRIBUTION DE LIQUIDE LAVE-GLACE POUR VÉHICULE AUTOMOBILE ET PROCÉDÉ DE PROTECTION D'UN TEL CIRCUIT**
WASCHWASSERAUSGABEKREISLAUF FÜR EIN KRAFTFAHRZEUG UND VERFAHREN ZUM SCHUTZ EINES SOLCHEN KREISLAUFES
WASHER FLUID DISPENSING CIRCUIT FOR MOTOR VEHICLE AND METHOD OF PROTECTING SUCH A CIRCUIT

(30) Priorité: 06.05.2011 FR 1153920
(43) Date de publication de la demande: 12.03.2014
(73) Titulaire: Peugeot Citroën Automobiles SA, 78140 Vélizy Villacoublay (FR); MGI Coutier S.A., Champfromier 01410 (FR)
(72) Inventeur: JEUFFE, Gerard, F-78580 Bazemont (FR); LEBLANC, Nicolas, F-26300 Besayes (FR)
(74) Mandataire: Ménès, Catherine
(86) Numéro de dépôt international: PCT/FR2012/050884
(87) Numéro de publication internationale: WO 2012/153026

(56) Documents cités:
- WO-A1-2004/012969
- WO-A1-2008/038816
- DE-A1-102007 011 624
- DE-A1-102008 051 586

## Description

La présente invention revendique la priorité de la demande française 1153920 déposée le 6 Mai 2011.

La présente invention concerne un circuit de distribution de liquide lave-glace pour un véhicule, tel qu'un véhicule automobile ainsi qu'un procédé de protection d'un tel circuit.

Traditionnellement, un circuit de distribution de liquide lave-glace comprend un réservoir de stockage de liquide lave-glace placé dans le compartiment moteur du véhicule, dans un espace libre de l'aile de ce véhicule ou tout autre emplacement dans le véhicule, une pompe d'alimentation en liquide lave-glace pouvant être intégrée au réservoir de stockage et une canalisation reliant la pompe à des gicleurs permettant de pulvériser du liquide lave-glace sur le pare-brise du véhicule ou les vitres des phares avant de ce véhicule ou à un gicleur permettant de pulvériser du liquide lave-glace sur la lunette arrière du véhicule.

Les gicleurs sont parfois montés sur les bras de support des balais d'essuie-glace ou sur les balais d'essuie-glace eux-mêmes et une partie de la canalisation est alors située à l'extérieur du véhicule.

Dans ces conditions, du fait que ces gicleurs et la partie externe de canalisation d'alimentation en liquide lave-glace des gicleurs ne sont pas abrités par le capot moteur du véhicule, le liquide lave-glace présent dans ceux-ci peut geler par temps froid et sous l'effet aérodynamique d'avancement du véhicule, rendant inutilisable les gicleurs.

Afin d'éviter le gel du liquide lave-glace dans les gicleurs et la partie externe de canalisation, une solution simple consiste à purger complètement le circuit de distribution du liquide lave-glace en le retournant dans le réservoir.

Cependant, cette solution a pour inconvénient d'allonger le temps de réponse de la fonction de lavage des vitres surtout quand le réservoir et la pompe sont implantés de façon éloignée des gicleurs.

Le document DE 38 40 621 décrit un circuit de distribution de liquide lave-glace comportant dans celui-ci une valve ou clapet permettant de diriger le liquide lave-glace vers au moins un gicleur lorsqu'une pompe d'alimentation en liquide lave-glace est activée et permettant au liquide lave-glace stagnant dans une partie de canalisation située à l'extérieur entre le gicleur et la valve d'être évacué dans le réservoir de stockage de liquide lave-glace lorsque la pompe est arrêtée pour éviter à ce liquide de geler par temps froid. La valve est constituée d'une pièce mobile qui occupe une position différente en fonction de la pression du liquide lave-glace, ouvrant des passages spécifiques pour permettre l'alimentation du gicleur en liquide lave-glace ou d'évacuer le liquide lave-glace contenu dans la partie externe de canalisation reliée au gicleur.

Cependant, selon ce circuit de distribution de liquide lave-glace connu, l'évacuation du liquide lave-glace contenu dans la partie externe de canalisation reliée au gicleur s'effectue par gravité, de sorte qu'il peut subsister du liquide lave-glace dans cette canalisation, notamment lorsqu'elle comporte une partie sensiblement horizontale, ou des points bas où l'eau se retrouve piégée par gravité, ne résolvant ainsi pas complètement le problème de gel par temps froid de cette partie résiduelle de liquide lave-glace.

La présente invention a pour but de palier les inconvénients ci-dessus des circuits de distribution de liquide lave-glace connus.

A cet effet, selon l'invention, le circuit de distribution de liquide lave-glace pour un véhicule, tel qu'un véhicule automobile, comprenant au moins un gicleur, un ensemble à clapet disposé dans une canalisation reliant le gicleur à une pompe d'alimentation en liquide lave-glace à partir d'un réservoir de liquide lave-glace et permettant de diriger le liquide lave-glace vers le gicleur lorsque la pompe est activée et de retourner vers la pompe le liquide lave-glace présent dans un tronçon de canalisation entre le gicleur et l'ensemble à clapet lorsque la pompe est arrêtée, est caractérisé en ce que l'ensemble à clapet comprend un cylindre, un piston mobile dans le cylindre en définissant dans celui-ci des première et seconde chambres communiquant respectivement avec le tronçon de canalisation et la pompe, le piston pouvant être déplacé par le liquide lave-glace dans la première chambre à l'encontre de la force de rappel d'un organe élastiquement déformable lorsque la pompe est activée, un clapet logé dans le piston et apte à occuper une position d'ouverture d'un passage de communication entre les deux chambres lorsque le piston se trouve dans la première chambre pour diriger le liquide lave-glace vers le gicleur et une position d'obturation de ce passage lorsque le piston est déplacé par l'organe élastiquement déformable dans la seconde chambre et la pompe est arrêtée pour aspirer dans la première chambre le liquide lave-glace présent dans le tronçon de canalisation et retourner vers la pompe le liquide lave-glace présent dans la seconde chambre.

De préférence, le clapet est en forme de soupape à tige cylindrique tubulaire montée à coulissement dans le piston coaxialement à celui-ci et définissant le passage de communication entre les deux chambres, et à tête venant en appui d'étanchéité sur un siège du piston lorsque le clapet en forme de soupape occupe sa position d'obturation de ce passage, au moins un perçage radial étant réalisé dans la tige cylindrique tubulaire à proximité de la tête de soupape pour permettre la circulation du liquide lave-glace vers le gicleur au travers de la tige lorsque le clapet en forme de soupape occupe sa position d'ouverture.

Avantageusement, l'organe élastiquement déformable est un ressort hélicoïdal de compression monté dans la première chambre entre le piston et une paroi d'extrémité du cylindre.

Le siège du piston est formé dans un joint annulaire d'étanchéité solidaire du piston coaxialement à celui-ci et qui comprend des lèvres externe et interne d'étanchéité contactant respectivement la face interne périphérique de la paroi latérale du cylindre et la face externe périphérique de la tige cylindrique du clapet en forme de soupape.

Lorsque le clapet en forme de soupape occupe sa position d'ouverture, l'extrémité de la tige est en appui sur une paroi d'extrémité du cylindre de manière à désengager la tête du clapet en forme de soupape du siège du piston.

Le gicleur est monté sur un essuie-glace du véhicule et au moins une partie du tronçon de canalisation est située à l'extérieur du capot moteur du véhicule tandis que l'ensemble à clapet est logé dans le compartiment moteur de ce véhicule.

Le volume interne de l'ensemble à clapet est sensiblement égal au volume d'eau présent dans le tronçon de canalisation raccordé au gicleur.

L'invention vise également un procédé de protection d'un circuit de distribution de liquide lave-glace d'un véhicule, tel qu'un véhicule automobile, et qui est caractérisé en ce que le dispositif d'alimentation en liquide lave-glace des gicleurs est purgé partiellement par aspiration.

L'invention vise enfin un véhicule, tel qu'un véhicule automobile et qui est caractérisé en ce qu'il est équipé d'un circuit de distribution tel que défini précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en plan représentant schématiquement un circuit de distribution de liquide lave-glace de l'invention ;
- la figure 2 est une vue en coupe longitudinale d'un ensemble à clapet de l'invention du circuit de distribution de la figure 1 et occupant une position inactive ;
- la figure 3 est une vue semblable à celle de la figure 2 et montrant l'ensemble à clapet occupant une position active de pulvérisation de liquide lave-glace ; et
- la figure 4 est une vue semblable à celle de la figure 3 et montrant l'ensemble à clapet à une position aspirant du liquide lave-glace d'une portion de canalisation reliant cet ensemble à des gicleurs.

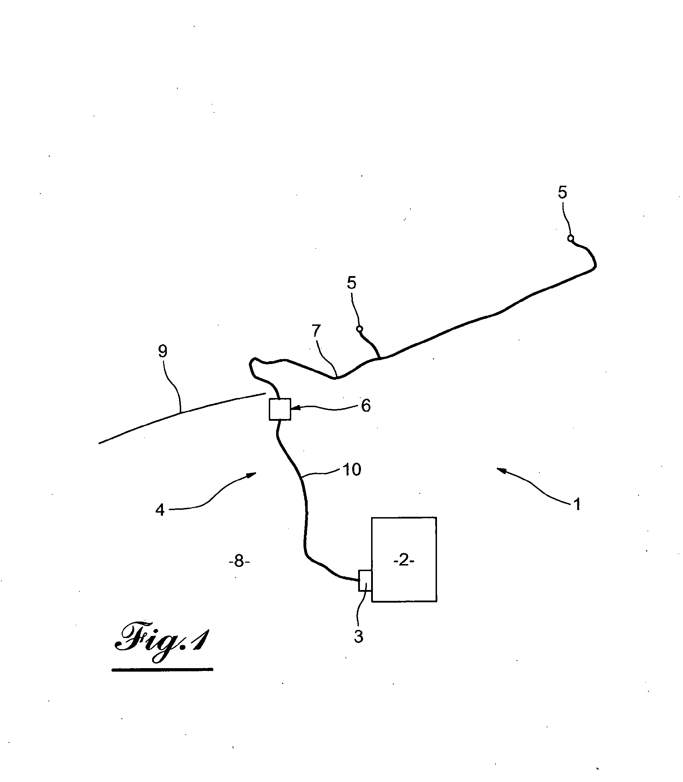

En se reportant tout d'abord à la figure 1, la référence 1 désigne un circuit de distribution de liquide lave-glace d'un véhicule et comprenant un réservoir 2 de stockage de liquide lave-glace, une pompe 3 d'alimentation en liquide lave-glace pouvant être intégrée directement au réservoir 2, une canalisation 4 reliant la pompe 3 à deux gicleurs 5 de lavage d'une vitre du véhicule, notamment le pare-brise de celui-ci, non représentée. Dans ce cas, les deux gicleurs 5 peuvent être montés respectivement sur les deux bras pivotant des supports des balais d'essuyage du pare-brise ou sur les balais d'essuyage eux-mêmes. Cependant, les deux gicleurs 5 peuvent être respectivement montés sur deux bras de support de balais d'essuyage de vitres de phares avant du véhicule ou sur les balais d'essuyage eux-mêmes. Il est également possible de ne prévoir qu'un seul gicleur monté sur un bras de support du balai d'essuyage de la lunette arrière du véhicule ou sur le balai d'essuyage lui-même.

Un ensemble formant clapet 6 est disposé sur la canalisation 4 et permet de diriger le liquide lave-glace vers les gicleurs 5 lorsque la pompe 3 est activée pour nettoyer la vitre et de redescendre ou d'évacuer vers le réservoir 2 au travers de la pompe 3 le liquide lave-glace présent ou stagnant dans un tronçon supérieur 7 de la canalisation 4 situé entre les gicleurs 5 et l'ensemble formant clapet 6 lorsque la pompe 3 est arrêtée.

Selon la conception du circuit de distribution représenté en figure 1, le réservoir 2 et la pompe 3 sont disposés en partie basse du compartiment moteur 8 du véhicule fermée par le capot 9 mais ils peuvent être disposés dans un espace libre de l'aile du véhicule ou dans tout autre emplacement disponible du véhicule.

En outre, l'ensemble formant clapet 6, ainsi que le second tronçon 10 de canalisation reliant cet ensemble à la pompe 3, est également disposé dans le compartiment moteur du véhicule.

Le premier tronçon supérieur de canalisation 7 raccordé aux gicleurs 5 est en grande partie disposé à l'extérieur du compartiment moteur 8 du véhicule sans être protégé par le capot 9, de sorte que par temps froid et/ou sous l'effet aérodynamique d'avancement du véhicule, le liquide lave-glace contenu dans les gicleurs 5 et le premier tronçon supérieur 7 peut geler.

Le rôle de l'ensemble formant clapet 6 est de résoudre ce problème en évacuant le liquide lave-glace stagnant dans le premier tronçon supérieur 7 de la canalisation 4.

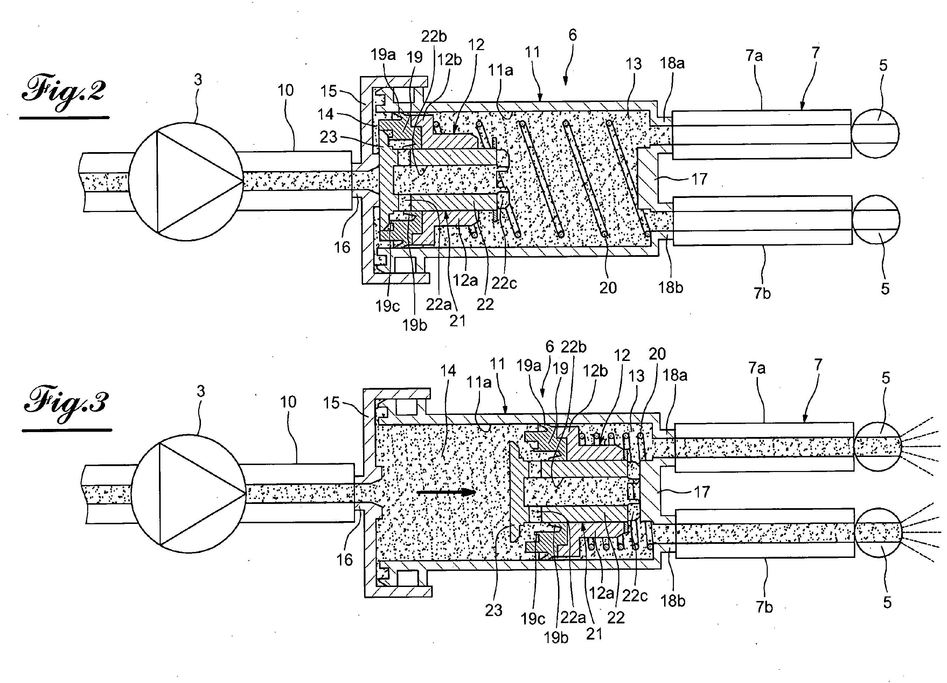

Selon l'invention et comme représenté aux figures 2 à 4, l'ensemble formant clapet 6 comprend un cylindre 11 disposé en série entre le premier tronçon de canalisation 7 et le second tronçon de canalisation 10, et un piston 12 monté mobile dans le cylindre 11 en définissant dans celui-ci des première 13 et seconde 14 chambres communiquant respectivement avec le premier tronçon de canalisation 7 raccordé aux gicleurs 5 et le second tronçon de canalisation 10 relié à la pompe 3.

Le cylindre 11 de l'ensemble formant clapet 6 est fermé d'un côté du tronçon de canalisation 10 par une paroi transversale d'extrémité 15 comportant un embout central 16 débouchant dans la seconde chambre 14 et sur lequel est raccordée l'extrémité correspondante du second tronçon de canalisation 10.

Le premier tronçon de canalisation 7 est représenté comme étant constitué par deux conduites 7a, 7b raccordées respectivement aux deux gicleurs 5, mais il est bien entendu que ce premier tronçon de canalisation peut être constitué par une seule conduite raccordée aux deux gicleurs 5 à la manière représentée en figure 1.

Le cylindre 11 de l'ensemble formant clapet 6 comprend du côté du premier tronçon de canalisation 7 une paroi d'extrémité transversale de fermeture 17 comportant deux embouts parallèles 18a, 18b débouchant dans la première chambre 13 et auxquels sont raccordées respectivement les deux parties d'extrémité des conduites 7a, 7b du premier tronçon de canalisation 7.

Le piston 12 comprend une partie centrale tubulaire cylindrique 12a et, à son extrémité côté seconde chambre 14, une collerette 12b en contact glissant avec la face interne périphérique 11a de la paroi latérale du cylindre 11.

Le piston 12 comprend en outre un joint d'étanchéité annulaire 19 solidaire de la collerette 12b de ce piston coaxialement au piston 12 et qui comporte une lèvre externe d'étanchéité 19a en appui sur la face interne périphérique 11a de la paroi latérale du cylindre 11. Le joint d'étanchéité 19 comporte également une lèvre intérieure d'étanchéité 19b dont le rôle sera expliqué ultérieurement.

L'ensemble formant clapet 6 comprend également un ressort hélicoïdal de compression 20 monté dans la première chambre 13 du cylindre 11 entre le piston 12 et la paroi d'extrémité 17 du cylindre 11. Plus précisément, le ressort 20 est monté concentriquement au cylindre 11 et au piston 2 et a l'une de ses spires extrêmes en appui sur la collerette 12b de ce piston tandis que sa spire extrême opposée est en appui sur la paroi d'extrémité 17 du cylindre 11.

L'ensemble formant clapet 6 comprend en outre un clapet 21 présentant la forme générale d'une soupape dont la tige tubulaire cylindrique 22 est montée à coulissement guidé dans la partie tubulaire cylindrique 12a du piston 12 et la tête 23 peut venir en appui d'étanchéité dans un siège annulaire 19c du joint 19.

La lèvre d'étanchéité interne 19b du joint 19 est en appui sur la face externe périphérique de la tige cylindrique 22 du clapet 21.

La tige tubulaire cylindrique 22 du clapet 21 comporte au moins un perçage radial 22a traversant la paroi latérale de cette tige en étant situé à proximité de la tête 23 du clapet 21. Ainsi, le perçage radial 22a débouche non seulement au niveau de la tête 23 du clapet 21, mais également dans le passage cylindrique interne 22b de la tige tubulaire 22 apte à mettre en communication l'une avec l'autre les deux chambres 13, 14 comme on le verra ultérieurement.

La tige tubulaire cylindrique 22 du clapet 21 comprend en outre à son extrémité opposée à la tête 23 un ou plusieurs perçages radiaux 22c.

Le volume interne de l'ensemble formant clapet 6 est sensiblement égal au volume d'eau présent dans le premier tronçon de canalisation 7.

Le fonctionnement du circuit de distribution ressort déjà de la description qui précède et va être maintenant expliqué.

Les conditions initiales de fonctionnement sont celles représentées en figure 2, où la première chambre 13 du cylindre 11 est déjà remplie de liquide lave-glace et les deux conduites 7a, 7b du premier tronçon de canalisation 7 ne comportent pas de liquide lave-glace. En outre, le ressort 20 est détendu de manière à repousser le piston 12 vers la gauche par rapport à la figure 2 à une position à laquelle la face frontale de la tête 23 du clapet 21 est en appui sur une partie d'extrémité de l'embout 16 faisant saillie dans la chambre 14 d'un volume quasiment nul.

Lorsque la pompe 3 est sollicitée par une commande de l'utilisateur du véhicule, le liquide lave-glace sous pression exerce sur le clapet 21 et le piston 12 un effort axial de poussée déplaçant cet ensemble à l'encontre de la force de rappel du ressort 20, remplissant alors en liquide lave-glace la chambre 14, la tête 23 du clapet 21 étant maintenue par la pression du liquide lave-glace constamment en appui d'étanchéité sur le siège 19c du joint 19 jusqu'à ce que l'extrémité de la tige cylindrique 22 du clapet 21 vienne en appui sur la paroi d'extrémité 17 du cylindre 11 pour provoquer le déplacement axial du piston 12 sur la tige 22 afin de décoller le siège 19c la tête 23 du clapet 21 comme représenté en figure 3.

A cette position, le liquide lave-glace sous pression présent dans la seconde chambre 14 du cylindre 11 circule dans l'espace annulaire défini entre la tête 23 du clapet 21 et le siège 19c, le perçage radial 22a de la tige 22, le passage interne 22b défini par la tige 22, les perçages radiaux d'extrémité 22c de la tige 22, la chambre 13 et les deux embouts 18a, 18b pour diriger le liquide lave-glace vers les gicleurs 5 à travers les deux conduites 7a, 7b du premier tronçon de canalisation 7 afin de permettre aux gicleurs de pulvériser du liquide lave-glace sur le pare-brise du véhicule.

La figure 3 montre que le ressort 20 est comprimé entre la paroi d'extrémité 17 du cylindre 11 et la collerette 12b du piston 12.

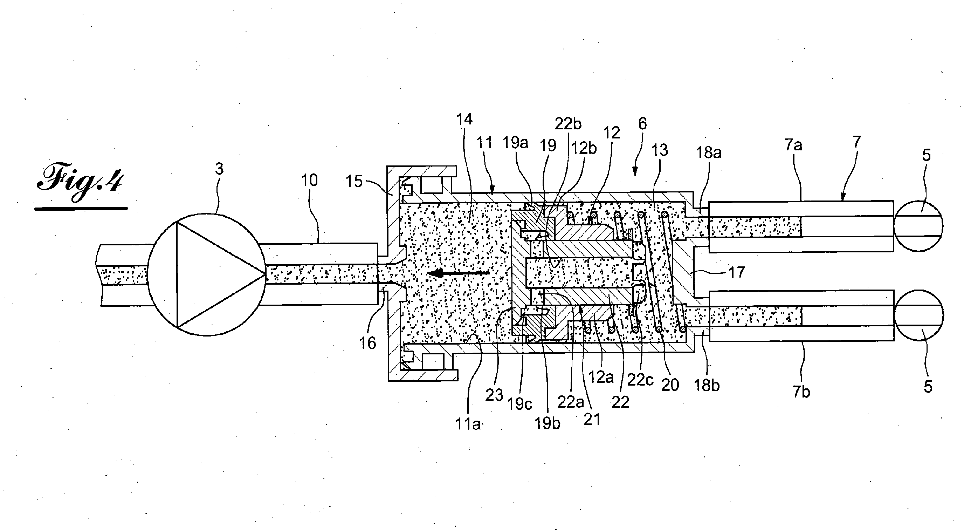

Lorsque la commande de la pompe 3 n'est plus activée, la pompe étant alors à l'arrêt, le ressort 20 se détend en exerçant sur le piston un effort axial le déplaçant dans le cylindre 11 vers la paroi d'extrémité 15 avec la tête 23 du clapet 21 en appui d'étanchéité sur son siège 19c, pour fermer le passage 22a et isoler l'une de l'autre les deux chambres 13, 14 du cylindre 11. Dans ces conditions, le déplacement du piston 12 vers la paroi d'extrémité 15 du cylindre 11 provoque un effet d'aspiration du liquide lave-glace présent dans les deux conduites 7a, 7b dans la chambre 13 comme le montre la figure 4 jusqu'à ce que le piston 12 atteigne sa position finale représentée en figure 2 à laquelle tout le liquide lave-glace présent dans les deux conduits 7a, 7b du tronçon de canalisation 7 à été aspiré dans la chambre 13. Bien entendu, le liquide lave-glace présent dans la chambre 14 lors du déplacement du piston 12 vers la paroi d'extrémité 15 du cylindre 11 est retourné dans le réservoir de stockage 2 au travers de la pompe 3, encore à l'arrêt.

Le volume aspiré de liquide lave-glace dans la chambre 13 est sensiblement égal au volume des conduites 7a, 7b.

De la sorte, il ne subsiste plus du tout de liquide lave-glace dans le tronçon de canalisation 7 situé à l'extérieur du véhicule, éliminant tout risque de gel de liquide lave-glace dans ce tronçon.

Le circuit de distribution de l'invention permet ainsi de conserver la fonction de lavage d'un pare-brise de véhicule à des températures négatives, fonction qui est un élément essentiel de sécurité pour assurer une visibilité parfaite au travers du pare-brise du véhicule.

En outre, la conception de ce circuit de distribution est telle qu'elle n'allonge pas le temps de réponse de la fonction de lavage des vitres et évite de purger complètement tout le circuit de distribution.

## Revendications

1. Circuit de distribution de liquide lave-glace pour un véhicule, tel qu'un véhicule automobile, comprenant au moins un gicleur (5), un ensemble à clapet (6) disposé dans une canalisation (7, 10) reliant le gicleur (5) à une pompe (3) d'alimentation en liquide lave-glace à partir d'un réservoir (2) de liquide lave-glace et permettant de diriger le liquide lave-glace vers le gicleur (5) lorsque la pompe (3) est activée et de retourner vers la pompe (3) le liquide lave-glace présent dans un tronçon de canalisation (7) entre le gicleur (5) et l'ensemble à clapet (6) lorsque la pompe (3) est arrêtée, et l'ensemble à clapet (6) comprend un cylindre (11), un piston (12) mobile dans le cylindre (11) en définissant dans celui-ci des première (13) et seconde (14) chambres communiquant respectivement avec le tronçon de canalisation (7) et la pompe (3), le piston (12) pouvant être déplacé par le liquide lave-glace dans la première chambre (13) à l'encontre de la force de rappel d'un organe élastiquement déformable (20) lorsque la pompe (3) est activée, le circuit étant **caractérisé en ce qu'**un clapet (21) est logé dans le piston (12) et apte à occuper une position d'ouverture d'un passage (22b) de communication entre les deux chambres (13,14) lorsque le piston (12) se trouve dans la première chambre (13) pour diriger le liquide lave-glace vers le gicleur (5) et une position d'obturation de ce passage lorsque le piston (12) est déplacé par l'organe élastiquement déformable (20) dans la seconde chambre (14) et la pompe (3) est arrêtée pour aspirer dans la première chambre (13) le liquide lave-glace présent dans le tronçon de canalisation (7) et retourner vers la pompe (3) le liquide lave-glace présent dans la seconde chambre (14).

2. Circuit de distribution selon la revendication 1, **caractérisé en ce que** le clapet (21) est en forme de soupape à tige cylindrique tubulaire (22) montée à coulissement dans le piston (12) coaxialement à celui-ci et définissant le passage de communication entre les deux chambres (13, 14), et à tête (23) venant en appui d'étanchéité sur un siège (19c) du piston (12) lorsque le clapet (21) en forme de soupape occupe sa position d'obturation de ce passage, au moins un perçage radial (22a) étant réalisé dans la tige cylindrique tubulaire (22) à proximité de la tête de soupape (23) pour permettre la circulation du liquide lave-glace vers le gicleur (5) au travers de la tige (22) lorsque le clapet en forme de soupape (21) occupe sa position d'ouverture.

3. Circuit de distribution selon la revendication 1 ou 2, **caractérisé en ce que** l'organe élastiquement déformable est un ressort hélicoïdal de compression (20) monté dans la première chambre (13) entre le piston (12) et une paroi d'extrémité (17) du cylindre (11).

4. Circuit de distribution selon la revendication 2 ou 3, **caractérisé en ce que** le siège (19c) du piston (12) est formé dans un joint annulaire d'étanchéité (19) solidaire du piston (12) coaxialement à celui-ci et qui comprend des lèvres externe (19a) et interne (19b) d'étanchéité contactant respectivement la face interne périphérique de la paroi latérale du cylindre (11) et la face externe périphérique de la tige cylindrique (22) du clapet en forme de soupape (21).

5. Circuit de distribution selon l'une des revendications 2 à 4, **caractérisé en ce que**, lorsque le clapet en forme de soupape (21) occupe sa position d'ouverture, l'extrémité de la tige (22) est en appui sur une paroi d'extrémité (17) du cylindre (11) de manière à désengager la tête (23) du clapet en forme de soupape (21) du siège (19c) du piston (12).

6. Circuit de distribution selon l'une des revendications précédentes, **caractérisé en ce que** le gicleur (5) est monté sur un essuie-glace du véhicule et au moins une partie du tronçon de canalisation (7) est située à l'extérieur du capot moteur (9) du véhicule tandis que l'ensemble à clapet (6) est logé dans le compartiment moteur (8) de ce véhicule.

7. Circuit de distribution selon l'une des revendications précédentes, **caractérisé en ce que** le volume interne de l'ensemble à clapet (6) est sensiblement égal au volume d'eau présent dans le tronçon de canalisation (7) raccordé au gicleur (5).

8. Procédé de protection d'un circuit de distribution de liquide lave-glace d'un véhicule, tel qu'un véhicule automobile selon la revendication 1, **caractérisé en ce que** le dispositif d'alimentation des gicleurs (5) en liquide lave-glace est purgé partiellement par aspiration.

9. Véhicule, tel qu'un véhicule automobile, **caractérisé en ce qu'**il est équipé d'un circuit de distribution (1) tel que défini dans l'une quelconque des revendications 1 à 7.

## Patentansprüche

1. Kreislauf zur Abgabe einer Scheibenwaschflüssigkeit für ein Fahrzeug, beispielsweise ein Kraftfahrzeug, zumindest eine Düse (5) umfassend, sowie eine Ventilanordnung (6), die in einem Leitungsnetz (7, 10) angeordnet ist, das die Düse (5) mit einer Pumpe (3) für die Zuführung einer Scheibenwaschflüssigkeit aus einem Behälter (2) für Scheibenwaschflüssigkeit verbindet und es ermöglicht, die Scheibenwaschflüssigkeit zur Düse (5) zu leiten, wenn die Pumpe (3) eingeschaltet wird, und jene Scheibenwaschflüssigkeit zur Pumpe (3) zurückzuführen, die in einem Abschnitt des Leitungsnetzes (7) zwischen der Düse (5) und der Ventilanordnung (6) enthalten ist, wenn die Pumpe (3) ausgeschaltet wird, wobei die Ventilanordnung (6) einen Zylinder (11) umfasst, sowie einen Kolben (12), der sich im Zylinder (11) bewegt, und in diesem eine erste (13) und eine zweite (14) Kammer definiert, die jeweils mit dem Abschnitt des Leitungsnetzes (7) und der Pumpe (3) verbunden sind, wobei der Kolben (12) durch die Scheibenwaschflüssigkeit entgegen die Rückholkraft eines elastisch verformbaren Elements (20) in die erste Kammer (13) verschoben werden kann, wenn die Pumpe (3) eingeschaltet wird, wobei das Leitungsnetz **dadurch gekennzeichnet ist, dass** eine Klappe (21) im Kolben (12) untergebracht ist, und in der Lage ist, eine Öffnungsposition eines Verbindungsdurchlasses (22b) zwischen den beiden Kammern (13, 14) einzunehmen, wenn sich der Kolben (12) in der ersten Kammer (13) befindet, um die Scheibenwaschflüssigkeit zur Düse (5) zu leiten, und eine Verschließposition dieses Durchlasses, wenn der Kolben (12) durch das elastisch verformbare Element (20) in die zweite Kammer (14) verschoben wird, und die Pumpe (3) ausgeschaltet wird, um die im Abschnitt des Leitungsnetzes (7) vorhandene Scheibenwaschflüssigkeit in die erste Kammer (13) zu saugen und um die in der zweiten Kammer (14) vorhandene Scheibenwaschflüssigkeit zur Pumpe (3) zurückzuführen.

2. Abgabekreislauf nach Anspruch 1, **dadurch gekennzeichnet, dass** die Klappe (21) in Form eines Ventils mit rohrförmigem zylindrischem Schaft (22) ausgeführt ist, und gleitend im Kolben (12) koaxial zu diesem montiert ist, und den Verbindungsdurchlass zwischen den beiden Kammern (13, 14) definiert, und mit einem Kopf (23), der sich zur Abdichtung an einen Sitz (19c) des Kolbens (12) anlegt, wenn die Klappe (21) in Form eines Ventils ihre Verschließposition dieses Durchlasses einnimmt, wobei zumindest eine radiale Bohrung (22a) im rohrförmigen zylindrischen Schaft (22) in der Nähe des Ventilkopfes (23) ausgeführt ist, um das Zirkulieren der Scheibenwaschflüssigkeit zur Düse (5) durch den Schaft (22) hindurch zu ermöglichen, wenn die Klappe (21) in Form eines Ventils ihre Öffnungsposition einnimmt.

3. Abgabekreislauf nach Anspruch 1 oder 2, **dadurch gekennzeichnet, dass** das elastisch verformbare Element eine Kompressionsspiralfeder (20) ist, die in der ersten Kammer (13) zwischen dem Kolben (12) und einer Wand (17) am Ende des Zylinders (11) montiert ist.

4. Abgabekreislauf nach Anspruch 2 oder 3, **dadurch gekennzeichnet, dass** der Sitz (19c) des Kolbens (12) in einer Ringdichtung (19) ausgeformt ist, die koaxial angeordnet und fest mit dem Kolben (12) verbunden ist, und eine äußere (19a) und eine innere (19b) Dichtlippe umfasst, die jeweils die umlaufende Innenfläche der Seitenwand des Zylinders (11) und die umlaufende Außenfläche des zylindrischen Schafts (22) der Klappe in Form eines Ventils (21) berührt.

5. Abgabekreislauf nach einem der Ansprüche 2 bis 4, **dadurch gekennzeichnet, dass** das Ende des Schaftes (22), wenn die Klappe in Form eines Ventils (21) ihre Öffnungsposition einnimmt, an einer Wand (17) am Ende des Zylinders (11) anliegt, um den Kopf (23) der Klappe in Form eines Ventils (21) vom Sitz (19c) des Kolbens (12) abzuheben.

6. Abgabekreislauf nach einem der vorherigen Ansprüche, **dadurch gekennzeichnet, dass** die Düse (5) auf einem Scheibenwischer des Fahrzeugs montiert ist, und zumindest ein Teil des Abschnitts des Leitungsnetzes (7) außerhalb der Motorhaube (9) des Fahrzeugs liegt, während die Ventilanordnung (6) im Motorraum (8) dieses Fahrzeugs untergebracht ist.

7. Abgabekreislauf nach einem der vorherigen Ansprüche, **dadurch gekennzeichnet, dass** das Innenvolumen der Ventilanordnung (6) in etwa gleich dem Wasservolumen ist, das sich im Abschnitt des Leitungsnetzes (7) befindet, das an die Düse (5) angeschlossen ist.

8. Verfahren zum Schutz eines Leitungsnetzes zur Abgabe einer Scheibenwaschflüssigkeit eines Fahrzeugs, beispielsweise eines Kraftfahrzeugs nach Anspruch 1, **dadurch gekennzeichnet, dass** die Vorrichtung zum Zuführen von Scheibenwaschflüssigkeit zu den Düsen (5) teilweise durch Absaugen entleert wird.

9. Fahrzeug, beispielsweise ein Kraftfahrzeug, **dadurch gekennzeichnet, dass** es mit einem Abgabekreislauf (1) nach einem der Ansprüche 1 bis 7 ausgestattet ist.

## Claims

1. Circuit for distributing screen-washer liquid for a vehicle, such as a motor car, comprising at least one nozzle (5), a shutter assembly (6) disposed in a pipe (7, 10) connecting the nozzle (5) to a pump (3) supplying screen-washer liquid from a screen washer liquid reservoir (2) and directing the screen-washer liquid to the nozzle (5) when the pump (3) is activated and returning to the pump (3) the screen-washer liquid present in a portion of pipe (7) between the nozzle (5) and the shutter assembly (6) when the pump (3) is stopped, and the shutter assembly (6) comprises a cylinder (11), a piston (12) able to move in the cylinder (11), defining therein first (13) and second (14) chambers communicating respectively with the portion of pipe (7) and the pump (3), the piston (12) being able to be moved by the screen-washer liquid in the first chamber (13) counter to the return force of an elastically deformable member (20) when the pump (3) is activated, the circuit being **characterised in that** a shutter (21) is housed in the piston (12) and is able to occupy a position of opening a communication passage (22b) between the two chambers (13, 14) when the piston (12) is situated in the first chamber (13) in order to direct the screen-washer liquid towards the nozzle (5) and a position of closing off this passage when the piston (12) is moved by the elastically deformable member (20) in the second chamber (14) and the pump (3) is stopped in order to suck into the first chamber (13) the screen-washer liquid present in the portion of pipe (7) and to return to the pump (3) the screen-washer liquid present in the second chamber (14).

2. Distribution circuit according to claim 1, **characterised in that** the shutter (21) is in the form of a valve with a tubular cylindrical rod (22) mounted for sliding in the piston (12) coaxially therewith and defining the communication passage between the two chambers (13, 14), and with a head (23) coming into sealed abutment on a seat (19c) of the piston (12) when the shutter (21) in the form of a valve occupies its position of closing off this passage, at least one radial piercing (22a) being produced in the tubular cylindrical rod (22) close to the valve head (23) to allow circulation of the screen-washer liquid towards the nozzle (5) through the rod (22) when the shutter in form of a valve (21) occupies its open position.

3. Distribution circuit according to claim 1 or 2, **characterised in that** the elastically deformable member is a helical compression spring (20) mounted in the first chamber (13) between the piston (12) and an end wall (17) of the cylinder (11).

4. Distribution circuit according to claim 2 or 3, **characterised in that** the seat (19c) of the piston (12) is formed in an annular seal (19) secured to the piston (12) coaxially therewith and which comprises external (19a) and internal (19b) sealing lips respectively contacting the peripheral internal face of the lateral wall of the cylinder (11) and the peripheral external face of the cylindrical rod (22) of the shutter in the form of a valve (21).

5. Distribution circuit according to one of claims 2 to 4, **characterised in that**, when the shutter in the form of a valve (21) occupies its open position, the end of the rod (22) is in abutment on an end wall (17) of the cylinder (11) so as to disengage the head (23) of the shutter in the form of a valve (21) from the seat (19c) of the piston (12).

6. Distribution circuit according to one of the preceding claims, **characterised in that** the nozzle (5) is mounted on a wiper of the vehicle and at least part of the portion of pipe (7) is situated outside the engine bonnet (9) of the vehicle while the shutter assembly (6) is housed in the engine compartment (8) of this vehicle.

7. Distribution circuit according to one of the preceding claims, **characterised in that** the internal volume of the shutter assembly (6) is substantially equal to the volume of water present in the portion of pipe (7) connected to the nozzle (5).

8. Method for protecting a circuit for dispensing screen-washer liquid of a vehicle, such as a motor car, according to claim 1, **characterised in that** the device supplying the nozzles (5) with screen-washer liquid is partially drained by suction.

9. Vehicle, such as a motor vehicle, **characterised in that** it is equipped with a distribution circuit (1) as defined in any one of claims 1 to 7.
